# EUROPEAN PATENT APPLICATION

(11) **EP 4 682 997 A1**
(43) Date of publication of application: **21.01.2026**
(21) Application number: 23927885.6
(22) Date of filing: 17.03.2023
(51) Int. Cl.: H01M 4/66

(54) **SECONDARY BATTERY AND ELECTRONIC APPARATUS**

(71) Applicant: Ningde Amperex Technology Limited, Ningde City, 352100 (CN)
(72) Inventor: LIU, Jingying, Ningde, Fujian 352100 (CN)
(74) Representative: Kraus & Lederer PartGmbB
(86) International application number: PCT/CN2023/082190
(87) International publication number: WO 2024/192566

(57) **Abstract**

This application provides a secondary battery and an electronic apparatus, where the secondary battery includes a packaging bag and an electrode assembly accommodated within the packaging bag. The electrode assembly includes a positive electrode plate and a negative electrode plate; where the positive electrode plate includes a positive electrode current collector, the positive electrode current collector including a first metal layer; and the negative electrode plate includes a negative electrode current collector, an elongation rate of the negative electrode current collector being 8% to 25%, and a tensile strength of the negative electrode current collector being 200 MPa to 450 MPa. When the elongation rate and tensile strength of the negative electrode current collector are within the above ranges, the debris generated by the negative electrode current collector is reduced when the secondary battery is subjected to an external impact, which can lower the probability of the negative electrode current collector debris acting as a short-circuit site and triggering the positive electrode current collector-negative electrode material layer short-circuit mode, thereby contributing to improving the safety performance of the secondary battery.

## Description

### TECHNICAL FIELD

This application relates to the field of electrochemical technologies, and in particular, to a secondary battery and an electronic apparatus.

### BACKGROUND

Secondary batteries, such as lithium-ion batteries, due to their chemical characteristics and system composition, have safety performance as one of the significant concerns for consumers. The issue of failure due to mechanical abuse, such as impact, has also become a critical focus. A lithium battery primarily consists of a positive electrode plate, a negative electrode plate, and a separator. The positive electrode plate includes a positive electrode current collector and a positive electrode material layer, and the negative electrode plate includes a negative electrode current collector and a negative electrode material layer. During an impact, if the separator is pierced, direct contact between the positive electrode plate and the negative electrode plate may occur, leading to a short circuit. Typically, four short-circuit modes are possible: positive electrode material layer-negative electrode material layer, positive electrode material layer-negative electrode current collector, positive electrode current collector-negative electrode current collector, and positive electrode current collector-negative electrode material layer. Among these, the short-circuit mode of positive electrode current collector-negative electrode material layer can cause a rapid local temperature rise, potentially triggering combustion or explosion, making it the most dangerous of the four short-circuit modes and significantly affecting the safety performance of lithium-ion batteries. Therefore, reducing the occurrence probability of the positive electrode current collector-negative electrode material layer short-circuit mode to improve the safety performance of lithium-ion batteries has become an urgent technical problem to be solved.

### SUMMARY

An objective of this application is to provide a secondary battery and an electronic apparatus to reduce the occurrence probability of the positive electrode current collector-negative electrode material layer short-circuit mode, thereby improving the safety performance of the secondary battery. The specific technical solution is as follows:

A first aspect of this application provides a secondary battery, including a packaging bag and an electrode assembly accommodated within the packaging bag. The electrode assembly includes a positive electrode plate and a negative electrode plate; where the positive electrode plate includes a positive electrode current collector, the positive electrode current collector including a first metal layer; and the negative electrode plate includes a negative electrode current collector, an elongation rate of the negative electrode current collector being 8% to 25%, and a tensile strength of the negative electrode current collector being 200 MPa to 450 MPa. When the elongation rate and tensile strength of the negative electrode current collector are within the above ranges, the debris generated by the negative electrode current collector is reduced when the secondary battery is subjected to an external impact, thereby reducing the generation of debris from the negative electrode plate. This can lower the probability of the negative electrode plate debris acting as a short-circuit site and triggering the positive electrode current collector-negative electrode material layer short-circuit mode, thus contributing to improving the safety performance of the secondary battery. Additionally, it allows the secondary battery to have appropriate hardness, facilitating good cycling performance.

In some embodiments of this application, the elongation rate of the negative electrode current collector is 15.2% to 25%, which can further reduce the generation of debris from the negative electrode plate, improving the safety performance of the secondary battery.

In some embodiments of this application, the tensile strength of the negative electrode current collector is 200 MPa to 310 MPa, which can further reduce the generation of debris from the negative electrode plate, improving the safety performance of the secondary battery.

In some embodiments of this application, a thickness of the negative electrode current collector is 2 µm to 14 µm, preferably 3 µm to 8 µm. When the thickness of the negative electrode current collector is within the above range, the safety performance of the secondary battery can be improved while maintaining energy density.

In some embodiments of this application, the negative electrode current collector is copper foil, nickel foil, or stainless steel foil, which can provide good electrical performance and manufacturing processability.

In some embodiments of this application, the negative electrode plate further includes a negative electrode material layer disposed on the negative electrode current collector, where the negative electrode material layer includes a negative electrode active material, and the negative electrode active material includes a carbon material and/or a silicon material.

In some embodiments of this application, a material of the first metal layer includes aluminum, which can enhance the electrical performance of the secondary battery.

In some embodiments of this application, the secondary battery further includes a separator, where the separator is disposed between the positive electrode plate and the negative electrode plate, and the first metal layer is at least partially located on an outer surface of the electrode assembly. This can increase the energy density of the secondary battery.

In some embodiments of this application, the positive electrode current collector further includes a polymer layer, where the polymer layer is stacked with the first metal layer, the polymer layer is located between two first metal layers, and a thickness of the first metal layer is 0.6 µm to 1.7 µm, which can further improve the safety performance and electrical performance of the secondary battery.

In some embodiments of this application, the thickness of the first metal layer is 0.8 µm to 1.5 µm. In some embodiments of this application, the thickness of the first metal layer is 0.8 µm to 1.2 µm. Controlling the thickness of the first metal layer can improve the safety performance and achieve good electrical performance of the secondary battery.

In some embodiments of this application, a thickness of the polymer layer is 3 µm to 15 µm. When the thickness of the polymer layer is within the above range, it can enhance the safety performance of the secondary battery while maintaining the strength of the positive electrode current collector and the energy density of the secondary battery.

In some embodiments of this application, a material of the polymer layer includes at least one of polyethylene terephthalate, polybutylene terephthalate, polycarbonate, polyether polyester, polyamide, polyimide, polymaleic anhydride, polymethyl methacrylate, glycidyl methacrylate grafted polyethylene, glycidyl methacrylate grafted polypropylene, glycidyl methacrylate grafted ethylene-propylene copolymer, polypropylene, ethylene-propylene copolymer, or ethylene-methacrylate copolymer. Selecting the above materials as the material of the polymer layer ensures that the strength, toughness, insulation, and formability of the polymer layer meet the requirements of the positive electrode current collector, providing good support for the first metal layer. When the secondary battery is pierced or impacted, it can better protect the inner electrode assembly, enhancing the safety performance of the secondary battery.

In some embodiments of this application, the packaging bag includes a sealing layer, a second metal layer, and a protective layer stacked together, where the second metal layer is located between the sealing layer and the protective layer, and the sealing layer is located on an inner side of the packaging bag; and the sealing layer includes a polyolefin, the second metal layer is aluminum foil, and the protective layer includes polyamide and/or polyethylene terephthalate. The sealing layer ensures the sealing performance of the secondary battery after encapsulation, preventing moisture and other substances from entering the packaging bag; and the arrangement of the protective layer and the selection of the above materials for the protective layer can better protect the inner electrode assembly when the secondary battery is pierced or impacted, enhancing the safety performance of the secondary battery.

In some embodiments of this application, a thickness of the second metal layer is 10 µm to 40 µm, and a thickness of the packaging bag is 50 µm to 120 µm. This can balance strength and energy density.

A second aspect of this application provides an electronic apparatus, including the secondary battery according to any of the foregoing embodiments. Thus, the electronic apparatus provided by this application has good safety performance.

The beneficial effects of this application are as follows:
This application provides a secondary battery and an electronic apparatus, where the secondary battery includes a packaging bag and an electrode assembly accommodated within the packaging bag. The electrode assembly includes a positive electrode plate and a negative electrode plate; where the positive electrode plate includes a positive electrode current collector, the positive electrode current collector including a first metal layer; and the negative electrode plate includes a negative electrode current collector, an elongation rate of the negative electrode current collector being 8% to 25%, and a tensile strength of the negative electrode current collector being 200 MPa to 450 MPa. When the elongation rate and tensile strength of the negative electrode current collector are within the above ranges, the debris generated by the negative electrode current collector is reduced when the secondary battery is subjected to an external impact, thereby reducing the generation of debris from the negative electrode plate. This can lower the probability of the negative electrode plate debris acting as a short-circuit site and triggering the positive electrode current collector-negative electrode material layer short-circuit mode, thus contributing to improving the safety performance of the secondary battery. Additionally, it allows the secondary battery to have appropriate hardness, facilitating good cycling performance.

Certainly, implementing any product or method of this application does not necessarily achieve all the advantages described above simultaneously.

### BRIEF DESCRIPTION OF DRAWINGS

The accompanying drawings described herein are intended for better understanding of this application and constitute a part of this application. Example embodiments and descriptions thereof in this application are intended to interpret this application and do not constitute any improper limitation on this application.
FIG. 1 is a schematic diagram of a cross-sectional structure along a thickness direction of an electrode assembly according to some embodiments of this application; and
FIG. 2 is a schematic diagram of a cross-sectional structure along a thickness direction of an electrode assembly according to some other embodiments of this application.

### DETAILED DESCRIPTION

To make the objective, technical solutions, and advantages of this application clearer, the following further describes this application in detail with reference to the accompanying drawings and embodiments. Apparently, the described embodiments are merely some but not all of embodiments of this application. All other embodiments obtained by a person of ordinary skill in the art based on some embodiments in this application fall within the protection scope of this application.

It should be noted that, in the specific embodiments of this application, a lithium-ion battery is used as an example of a secondary battery to explain this application, but the secondary battery of this application is not limited to lithium-ion batteries. The specific technical solution is as follows:

A first aspect of this application provides a secondary battery, including a packaging bag and an electrode assembly accommodated within the packaging bag. The electrode assembly includes a positive electrode plate and a negative electrode plate; where the positive electrode plate includes a positive electrode current collector, the positive electrode current collector including a first metal layer; and the negative electrode plate includes a negative electrode current collector, an elongation rate δ of the negative electrode current collector being 8% to 25%, and a tensile strength R of the negative electrode current collector being 200 MPa to 450 MPa. For example, the elongation rate δ of the negative electrode current collector may be 8%, 10%, 12%, 15%, 15.2%, 18%, 20%, 22%, 25%, or fall into a range composed of any two of these values, and the tensile strength R of the negative electrode current collector may be 200 MPa, 220 MPa, 250 MPa, 280 MPa, 300 MPa, 310 MPa, 350 MPa, 380 MPa, 400 MPa, 420 MPa, 450 MPa, or fall into a range composed of any two of these values. When the elongation rate and tensile strength of the negative electrode current collector are within the above ranges, it indicates high elongation rate and mechanical strength. When the secondary battery is subjected to an external impact, the debris generated by the negative electrode current collector is reduced, thereby reducing the generation of debris from the negative electrode plate. This can lower the probability of the negative electrode plate debris acting as a short-circuit site and triggering the positive electrode current collector-negative electrode material layer short-circuit mode, thus contributing to improving the safety performance of the secondary battery. Additionally, it allows the secondary battery to have appropriate hardness, facilitating good cycling performance. However, when the elongation rate of the negative electrode current collector is too low, for example, less than 7%, or the tensile strength of the negative electrode current collector is too low, for example, less than 190 MPa, the negative electrode current collector is prone to generating debris when the secondary battery is subjected to an external impact. Thus, the occurrence of the positive electrode current collector-negative electrode material layer short-circuit mode cannot be reduced, failing to improve the safety performance of the secondary battery. Moreover, due to the low tensile strength of the negative electrode current collector, the hardness of the secondary battery is reduced, making the secondary battery prone to deformation during cycling. When the elongation rate of the negative electrode current collector is too high, for example, greater than 26%, or the tensile strength of the negative electrode current collector is too high, for example, greater than 460 MPa, the cost of the negative electrode current collector increases sharply, affecting the cost of the secondary battery. By controlling the elongation rate and tensile strength of the negative electrode current collector within the above ranges, the safety performance of the secondary battery can be improved while controlling its cost.

In some embodiments of this application, the elongation rate of the negative electrode current collector is 15.2% to 25%. By controlling the elongation rate of the negative electrode current collector within the above range, the negative electrode current collector is less likely to generate debris after rupture and may form burrs. Even if an internal short circuit occurs, it is primarily in the positive electrode current collector-negative electrode current collector short-circuit mode, reducing the occurrence of the positive electrode current collector-negative electrode material layer short-circuit mode, thereby improving the safety performance of the secondary battery.

In some embodiments of this application, the tensile strength of the negative electrode current collector is 200 MPa to 310 MPa. By controlling the tensile strength of the negative electrode current collector within the above range, the negative electrode current collector has high hardness, improving the cycling performance and safety performance of the secondary battery.

In some embodiments of this application, the elongation rate of the negative electrode current collector is 15.2% to 25%, and the tensile strength of the negative electrode current collector is 200 MPa to 310 MPa. By controlling the elongation rate and tensile strength of the negative electrode current collector within the above ranges, the negative electrode current collector is less likely to generate debris after rupture and may form burrs. Even if an internal short circuit occurs, it is primarily in the positive electrode current collector-negative electrode current collector short-circuit mode, reducing the occurrence of the positive electrode current collector-negative electrode material layer short-circuit mode. Additionally, the negative electrode current collector has high hardness and is less likely to rupture under external impact or puncture, thereby improving the safety performance of the secondary battery. Moreover, the secondary battery is less prone to deformation, resulting in good cycling performance.

In some embodiments of this application, a thickness T of the negative electrode current collector is 2 µm to 14 µm. For example, the thickness T of the negative electrode current collector may be 2 µm, 4 µm, 6 µm, 8 µm, 10 µm, 12 µm, 14 µm, or fall into a range composed of any two of these values. By controlling the thickness of the negative electrode current collector within the above range, the elongation rate and tensile strength of the negative electrode current collector can also be within the ranges of this application, improving the safety performance of the secondary battery.

In some embodiments of this application, the thickness T of the negative electrode current collector is 3 µm to 8 µm. For example, the thickness T of the negative electrode current collector may be 3 µm, 4 µm, 5 µm, 6 µm, 7 µm, 8 µm, or fall into a range composed of any two of these values. By controlling the thickness of the negative electrode current collector within the above range, the safety performance of the secondary battery can be improved, costs can be reduced, and the influence on the volumetric energy density of the secondary battery can be minimized.

The negative electrode current collector with the above elongation rate, tensile strength, and thickness is commercially available. Typically, the preparation parameters during the manufacturing process of the negative electrode current collector may be adjusted to control the elongation rate, tensile strength, and thickness of the negative electrode current collector. For example, in some embodiments of this application, electrolytic copper foil may be used, and the elongation rate of the negative electrode current collector may be directionally controlled by adjusting the electrodeposition process parameters (for example, current density, pulse on-time, and pulse off-time). The tensile strength of the negative electrode current collector may be controlled by adjusting the heat treatment time and temperature, and the thickness of the negative electrode current collector may be controlled by adjusting the current density during the electrodeposition process. In some embodiments of this application, rolled copper foil may be used.

In some embodiments of this application, the negative electrode current collector is copper foil, nickel foil, or stainless steel foil. The above negative electrode current collector materials are readily available, and the resulting negative electrode current collector has an elongation rate and tensile strength within the ranges of this application, thereby improving the safety performance of the secondary battery.

In some embodiments of this application, the negative electrode plate further includes a negative electrode material layer disposed on the negative electrode current collector, where the negative electrode material layer includes a negative electrode active material, and the negative electrode active material includes a carbon material and/or a silicon material. The carbon material may include but is not limited to at least one of natural graphite, artificial graphite, mesocarbon microbeads, hard carbon, or soft carbon. The silicon material may include but is not limited to at least one of elemental silicon, silicon-carbon material, or silicon-oxygen material. The negative electrode material layer is disposed on at least one surface of the negative electrode current collector. The phrase "the negative electrode material layer is disposed on at least one surface of the negative electrode current collector" means that the negative electrode material layer may be disposed on one surface of the negative electrode current collector along its thickness direction or on both surfaces of the negative electrode current collector along its thickness direction. It should be noted that the "surface" herein may be the entire region or a partial region of the negative electrode current collector, and this application does not impose particular limitations, provided that the objectives of this application can be achieved. A thickness of the negative electrode material layer is not particularly limited in this application, provided that the objectives of this application can be achieved. For example, the thickness of the negative electrode material layer is 30 µm to 120 µm.

In some embodiments of this application, a material of the first metal layer includes aluminum. Aluminum has good thermal conductivity, which can quickly dissipate heat during a short circuit, reducing the risk of thermal runaway due to localized heat accumulation, thereby improving the safety performance of the secondary battery.

In some embodiments of this application, the secondary battery further includes a separator, where the separator is disposed between the positive electrode plate and the negative electrode plate, and the first metal layer is at least partially located on an outer surface of the electrode assembly. The positive electrode plate, separator, and negative electrode plate are stacked to form the electrode assembly, and the electrode assembly may be of a wound structure or a laminated structure. When the first metal layer is at least partially located on the outer surface of the electrode assembly, the first metal layer is exposed after the secondary battery is pierced or impacted. As a result, it is more likely to form the positive electrode current collector-negative electrode current collector short-circuit mode, reducing the positive electrode current collector-negative electrode material layer short-circuit mode. The heat from the positive electrode current collector-negative electrode current collector short-circuit mode can dissipate along the positive electrode current collector and negative electrode current collector, making it less likely to cause localized heat accumulation and trigger thermal runaway. Thus, the positive electrode current collector-negative electrode current collector short-circuit mode is safer than the positive electrode current collector-negative electrode material layer short-circuit mode, contributing to improving the safety performance of the secondary battery. Additionally, it can enhance energy density.

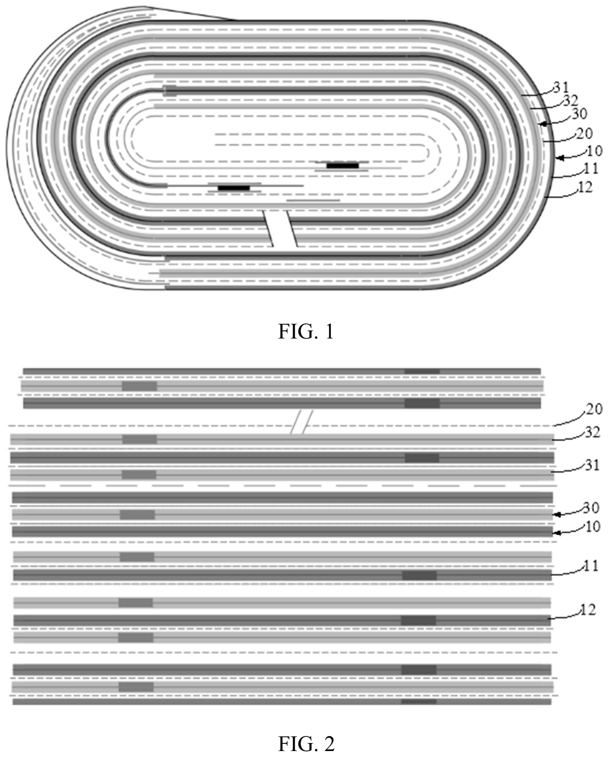

In some embodiments of this application, the electrode assembly is of a wound structure. As shown in FIG. 1, the electrode assembly is of a wound structure, formed by stacking and winding a positive electrode plate 10, a separator 20, and a negative electrode plate 30. The positive electrode plate includes a positive electrode current collector 11 and a positive electrode material layer 12, and the negative electrode plate includes a negative electrode current collector 31 and a negative electrode material layer 32. The positive electrode plate 10 includes a double-sided region where the positive electrode current collector 11 has the positive electrode material layer 12 on both sides, and a single-sided region where the positive electrode current collector 11 has the positive electrode material layer 12 on one side. The electrode assembly shown in FIG. 1 is terminated with the single-sided region of the positive electrode plate 10, with the positive electrode current collector 11 located on the outer surface of the electrode assembly, where the positive electrode current collector 11 is the first metal layer, meaning the first metal layer is at least partially located on the outer surface of the electrode assembly.

In some embodiments of this application, the electrode assembly is of a laminated structure. As shown in FIG. 2, the electrode assembly is of a laminated structure, formed by stacking a positive electrode plate 10, a separator 20, and a negative electrode plate 30. The positive electrode plate includes a positive electrode current collector 11 and a positive electrode material layer 12, and the negative electrode plate includes a negative electrode current collector 31 and a negative electrode material layer 32. The positive electrode plate 10 includes a double-sided plate where the positive electrode current collector 11 has the positive electrode material layer 12 on both sides, and a single-sided plate where the positive electrode current collector 11 has the positive electrode material layer 12 on one side. The double-sided plate is located inside the electrode assembly, and the positive electrode current collector 11 of the single-sided plate is located on the outer surface of the electrode assembly, where the positive electrode current collector 11 is the first metal layer, meaning the first metal layer is at least partially located on the outer surface of the electrode assembly.

In this application, when the positive electrode current collector is the first metal layer, the thickness of the first metal layer is the thickness of the positive electrode current collector. For example, the thickness of the positive electrode current collector may be 6 µm to 20 µm.

In some embodiments of this application, the positive electrode current collector further includes a polymer layer, where the polymer layer is stacked with the first metal layer, the polymer layer is located between two first metal layers, and a thickness T₁ of the first metal layer is 0.6 µm to 1.7 µm. For example, the thickness T₁ of the first metal layer may be 0.6 µm, 0.8 µm, 1.0 µm, 1.2 µm, 1.4 µm, 1.5 µm, 1.7 µm, or fall into a range composed of any two of these values. The positive electrode current collector includes a polymer layer, reducing the proportion of the first metal layer in the cross-section of the positive electrode current collector along its thickness direction. Consequently, when the secondary battery is subjected to an external impact, the proportion of the first metal layer after the positive electrode current collector ruptures is reduced, lowering the occurrence probability of the positive electrode current collector-negative electrode material layer short-circuit mode, thereby improving the safety performance of the secondary battery. Furthermore, using the negative electrode current collector with the above elongation rate and tensile strength can reduce the occurrence probability of the positive electrode current collector-negative electrode material layer short-circuit mode but the positive electrode current collector-negative electrode current collector short-circuit mode also exists. Including a polymer layer in the positive electrode current collector can also reduce the occurrence probability of the positive electrode current collector-negative electrode current collector short-circuit mode, further enhancing the safety performance of the secondary battery. Additionally, the first metal layer has an appropriate thickness, resulting in low impedance of the positive electrode current collector, thus meeting the electrical performance requirements of the secondary battery.

In some embodiments of this application, the electrode assembly is of a wound structure, formed by stacking and winding a positive electrode plate, a separator, and a negative electrode plate. The positive electrode plate includes a positive electrode current collector and a positive electrode material layer, and the negative electrode plate includes a negative electrode current collector and a negative electrode material layer. The positive electrode plate includes a double-sided region where the positive electrode current collector has the positive electrode material layer on both sides, and a single-sided region where the positive electrode current collector has the positive electrode material layer on one side. The electrode assembly is terminated with the single-sided region of the positive electrode plate, with the positive electrode current collector located on the outer surface of the electrode assembly, so that the first metal layer in the positive electrode current collector is at least partially located on the outer surface of the electrode assembly. In some embodiments of this application, the positive electrode plate further includes an empty foil region connected to the single-sided region and serving as the terminating part.

In some embodiments of this application, the electrode assembly is of a laminated structure, formed by stacking a positive electrode plate, a separator, and a negative electrode plate. The positive electrode plate includes a positive electrode current collector and a positive electrode material layer, and the negative electrode plate includes a negative electrode current collector and a negative electrode material layer. The positive electrode plate includes a double-sided plate where the positive electrode current collector has the positive electrode material layer on both sides, and a single-sided plate where the positive electrode current collector has the positive electrode material layer on one side. The double-sided plate is located inside the electrode assembly, and the positive electrode current collector of the single-sided plate is located on the outer surface of the electrode assembly, so that the first metal layer in the positive electrode current collector is at least partially located on the outer surface of the electrode assembly.

In some embodiments of this application, the thickness T₁ of the first metal layer is 0.8 µm to 1.5 µm. For example, the thickness T₁ of the first metal layer may be 0.8 µm, 1.0 µm, 1.2 µm, 1.4 µm, 1.5 µm, or fall into a range composed of any two of these values. When the thickness of the polymer layer is within the above range, it can enhance the safety performance of the secondary battery while maintaining the strength, electrical performance, and energy density of the positive electrode current collector. In this application, the thickness of the first metal layer refers to the thickness of a single first metal layer.

In some embodiments of this application, the thickness T₁ of the first metal layer is 0.8 µm to 1.2 µm. For example, the thickness T₁ of the first metal layer may be 0.8 µm, 1.0 µm, 1.2 µm, or fall into a range composed of any two of these values. When the thickness of the polymer layer is within the above range, it can further enhance the safety performance of the secondary battery while maintaining the strength, electrical performance, and energy density of the positive electrode current collector.

In some embodiments of this application, a thickness T₂ of the polymer layer is 3 µm to 15 µm. For example, the thickness T₂ of the polymer layer may be 3 µm, 5 µm, 7 µm, 9 µm, 10 µm, 12 µm, 14 µm, 15 µm, or fall into a range composed of any two of these values. When the thickness of the polymer layer is within the above range, it can enhance the safety performance of the secondary battery while maintaining the strength of the positive electrode current collector and the energy density of the secondary battery.

In some embodiments of this application, a material of the polymer layer includes at least one of polyethylene terephthalate, polybutylene terephthalate, polycarbonate, polyether polyester, polyamide, polyimide, polymaleic anhydride, polymethyl methacrylate, glycidyl methacrylate grafted polyethylene, glycidyl methacrylate grafted polypropylene, glycidyl methacrylate grafted ethylene-propylene copolymer, polypropylene, ethylene-propylene copolymer, or ethylene-methacrylate copolymer. Selecting the above materials as the material of the polymer layer ensures that the strength, toughness, insulation, and formability of the polymer layer meet the requirements of the positive electrode current collector, providing good support for the first metal layer. When the secondary battery is pierced or impacted, it can better protect the inner electrode assembly, enhancing the safety performance of the secondary battery.

A composite positive electrode current collector including a polymer layer and two first metal layers is commercially available. Typically, the preparation method of the composite positive electrode current collector may include but is not limited to the following steps: depositing the first metal layer on both surfaces of the polymer layer along its thickness direction to obtain a composite positive electrode current collector. The methods for controlling the thickness of the polymer layer and the first metal layer are not particularly limited in this application. For example, the thickness of the polymer layer may be adjusted by selecting polymer layers of different thicknesses, and the thickness of the first metal layer may be adjusted by controlling the deposition time. The deposition may include but is not limited to chemical vapor deposition, and this application does not impose limitations, provided that the objectives of this application can be achieved.

In some embodiments of this application, the packaging bag includes a sealing layer, a second metal layer, and a protective layer stacked together, where the second metal layer is located between the sealing layer and the protective layer, and the sealing layer is located on an inner side of the packaging bag; and the sealing layer includes a polyolefin, the second metal layer is aluminum foil, and the protective layer includes polyamide and/or polyethylene terephthalate. The polyolefin may include but is not limited to at least one of polypropylene or polyethylene. The sealing layer ensures the sealing performance of the secondary battery after encapsulation, preventing moisture and other substances from entering the packaging bag. The arrangement of the protective layer and the selection of the above materials for the protective layer can better protect the inner electrode assembly when the secondary battery is pierced or impacted, enhancing the safety performance of the secondary battery. The "inner side of the packaging bag" refers to the side of the packaging bag in contact with the electrode assembly.

In some embodiments of this application, a thickness T₃ of the second metal layer is 10 µm to 40 µm, and a thickness T₄ of the packaging bag is 50 µm to 120 µm. For example, the thickness T₃ of the second metal layer may be 10 µm, 15 µm, 20 µm, 25 µm, 30 µm, 35 µm, or 40 µm, and the thickness T₄ of the packaging bag may be 50 µm, 60 µm, 70 µm, 80 µm, 90 µm, 100 µm, 110 µm, or 120 µm. Currently, packaging shells or metal plates added to packaging bags are typically used to enhance the puncture resistance or impact resistance of secondary batteries. The secondary battery provided by this application, by combining the negative electrode current collector of this application, or combining the negative electrode current collector and positive electrode current collector of this application with the packaging bag, can improve the safety performance of the secondary battery. By controlling the thickness of the second metal layer and the thickness of the packaging bag within the above ranges, the resulting secondary battery has good puncture resistance or impact resistance, that is, good safety performance.

The thicknesses of the sealing layer and the protective layer are not particularly limited in this application, provided that the objectives of this application can be achieved. For example, the thickness of the sealing layer is 10 µm to 70 µm, and the thickness of the protective layer is 10 µm to 70 µm.

The packaging bag in this application is commercially available. Typically, the preparation method of the packaging bag may include but is not limited to the following steps: stacking the sealing layer, the second metal layer, and the protective layer, and then forming the packaging bag through hot pressing. The methods for controlling the thickness of the sealing layer, the second metal layer, and the protective layer are not particularly limited in this application. For example, the thickness of the sealing layer may be adjusted by controlling the temperature and pressure during the hot pressing process; the thickness of the second metal layer may be adjusted by selecting second metal layers of different thicknesses; and the thickness of the protective layer may be adjusted by controlling the temperature and pressure during the hot pressing process. The temperature and pressure for the hot pressing may be selected from known temperatures and pressures for hot pressing in the art, and this application does not impose limitations, provided that the objectives of this application can be achieved.

In this application, the negative electrode active material may further include other negative electrode active materials known in the art. For example, other negative electrode active materials known in the art may include but are not limited to at least one of Li-Sn alloy, Li-Sn-O alloy, Sn, SnO, SnO₂, lithiated TiO₂-Li₄Ti₅O₁₂ with a spinel structure, or Li-Al alloy.

A thickness of the negative electrode plate is not particularly limited in this application, provided that the objectives of this application can be achieved. For example, the thickness of the negative electrode plate is 50 µm to 300 µm.

The negative electrode material layer can further include a conductive agent and a binder. The types of the conductive agent and the binder are not particularly limited in this application, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivatives, polyaniline, polythiophene, polyacetylene, or polypyrrole. The binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamide-imide, styrene-butadiene rubber, or polyvinylidene fluoride. The mass ratio of the negative electrode active material is not particularly limited in this application, the conductive agent, and the binder in the negative electrode material layer, and persons skilled in the art may make selections based on actual needs, provided that the objectives of this application can be achieved.

Optionally, the negative electrode plate may further include a conductive layer, where the conductive layer is sandwiched between the negative electrode current collector and the negative electrode material layer. The composition of the conductive layer is not particularly limited in this application, which may be a conductive layer commonly used in the art. For example, the conductive layer includes a conductive agent and a binder. The conductive agent and the binder in the conductive layer is not particularly limited in this application, which may be, for example, at least one of the foregoing conductive agents and the foregoing binders.

In this application, the positive electrode plate includes the positive electrode current collector described above and a positive electrode material layer disposed on at least one surface of the positive electrode current collector. The phrase "positive electrode material layer disposed on at least one surface of the positive electrode current collector" means that the positive electrode material layer may be disposed on one surface of the positive electrode current collector along its thickness direction or on both surfaces of the positive electrode current collector along its thickness direction. It should be noted that the "surface" herein may be the entire region or a partial region of the surface of the positive electrode current collector. This is not particularly limited in this application, provided that the objectives of this application can be achieved.

The positive electrode material layer includes a positive electrode active material. The positive electrode active material is not particularly limited in this application, provided that the objectives of this application can be achieved. For example, the positive electrode active material may include but is not limited to at least one of lithium nickel cobalt manganese oxide (for example, commonly used NCM811, NCM622, NCM523, NCM111), lithium nickel cobalt aluminate, lithium iron phosphate, lithium-rich manganese-based material, lithium cobalt oxide (LiCoO₂), lithium manganese oxide, lithium manganese iron phosphate, or lithium titanate. The thickness of the positive electrode material layer is not particularly limited in this application, provided that the objectives of this application can be achieved. For example, the thickness of the positive electrode material layer is 30 µm to 120 µm.

A thickness of the positive electrode plate is not particularly limited in this application, provided that the objectives of this application can be achieved. For example, the thickness of the positive electrode plate is 50 µm to 300 µm.

The positive electrode material layer further includes a conductive agent and a binder. The types of the conductive agent and the binder are not particularly limited in this application, provided that the objectives of this application can be achieved. For example, the conductive agent may be the foregoing conductive agent, and the binder may be the foregoing binder. A mass ratio of the positive electrode active material, the conductive agent, and the binder in the positive electrode material layer is not particularly limited in this application, and persons skilled in the art may make selections based on actual needs, provided that the objectives of this application can be achieved.

Optionally, the positive electrode plate may further include a conductive layer, where the conductive layer is located between the positive electrode current collector and the positive electrode material layer. The composition of the conductive layer is not particularly limited and may be a conductive layer commonly used in the art. The conductive layer includes a conductive agent and a binder. The conductive agent and the binder in the conductive layer are not particularly limited in this application and may be, for example, at least one of the foregoing conductive agents and the foregoing binders.

In this application, the separator is configured to separate the positive electrode plate and the negative electrode plate, preventing internal short circuits in the secondary battery, allowing electrolyte ions to pass freely, and not affecting the electrochemical charge-discharge process. The separator is not particularly limited in this application, provided that the objectives of this application can be achieved. For example, a material of the separator may include but is not limited to at least one of polyethylene (PE) and polypropylene (PP)-based polyolefin (PO), polyester (for example, polyethylene terephthalate (PET) film), cellulose, polyimide (PI), polyamide (PA), spandex, or aramid. The type of the separator may include at least one of woven film, non-woven film, microporous film, composite film, laminated film, or spinning film.

For example, the separator may include a substrate layer and a surface treatment layer. The substrate layer may be a non-woven fabric, film, or composite film with a porous structure, and a material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylenepolyethylene-polypropylene porous composite film. Optionally, a surface treatment layer is disposed on at least one surface of the substrate layer, where the surface treatment layer may be a polymer layer or an inorganic substance layer, or a layer formed by mixing a polymer and an inorganic substance.

For example, the inorganic substance layer includes inorganic particles and a binder. The inorganic particle is not particularly limited and may include, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited and may be, for example, at least one of the foregoing binders. The polymer layer includes a polymer, and a material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In this application, the secondary battery further includes an electrolyte, where the electrolyte includes a non-aqueous solvent and a lithium salt. The lithium salt is not particularly limited in this application, provided that the objectives of this application can be achieved. For example, the lithium salt may include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalate)borate (LiBOB), or lithium difluoroborate. The non-aqueous solvent is not particularly limited in this application, provided that the objectives of this application can be achieved. For example, the non-aqueous solvent may include but is not limited to at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

A preparation process of the secondary battery of this application is well known to persons skilled in the art and is not particularly limited in this application. For example, the preparation process may include but is not limited to the following steps: stacking a positive electrode plate, a separator, and a negative electrode plate in sequence, performing operations such as winding and folding as needed to obtain an electrode assembly being of a wound structure, placing the electrode assembly into a packaging bag, injecting an electrolyte into the packaging bag, and sealing the packaging bag to obtain a secondary battery; or stacking a positive electrode plate, a separator, and a negative electrode plate in sequence, fixing the four corners of the entire laminated structure with tapes to obtain an electrode assembly being of a laminated structure, placing the electrode assembly into a packaging bag, injecting an electrolyte into the packaging bag, and sealing the packaging bag to obtain a secondary battery. Additionally, an overcurrent prevention element, a guide plate, and the like may also be placed into the packaging bag as needed to prevent pressure increase, overcharge, and overdischarge inside the secondary battery.

A second aspect of this application provides an electronic apparatus, including the secondary battery according to any of the foregoing embodiments. Thus, the electronic apparatus provided by this application has good safety performance. A type of the electronic apparatus is not particularly limited in this application and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Examples

The following examples and comparative examples are provided to further illustrate some embodiments of this application in detail. Various tests and evaluations were conducted according to the methods described below.

### Test methods and equipment

### Elongation rate test:

This test was conducted in accordance with the national standard GB/T 5230-2020 "Electrolytic Copper Foil for Printed Boards."

### Tensile strength test:

This test was conducted in accordance with the national standard GB/T 5230-2020 "Electrolytic Copper Foil for Printed Boards."

### Internal resistance test:

The lithium-ion batteries of the examples and comparative examples were tested in accordance with the national standard GB/T 18287-2013 "General Specification for Lithium-ion Cells and Batteries for Mobile Phones."

### Impact performance test:

The lithium-ion batteries of the examples and comparative examples were tested in accordance with the national standard GB/T 18287-2013 "General Specification for Lithium-ion Batteries and Battery Packs for Mobile Phones." 100 lithium-ion batteries were tested for each example or comparative example, and the impact pass rate = (number of passes × 100%) / number of tests.

### Energy density test:

In an environment of 25°C, a lithium-ion battery was charged at a constant current of 0.5C to 4.45 V, then charged at a constant voltage of 4.45 V to 0.025C, left standing for 5 min, discharged at a constant current of 0.5C to 3.0 V, and left standing for 5 min to obtain the discharge capacity C. After the charging steps of the lithium-ion battery were completed, a length L, a width W, and a height H of the lithium-ion battery were measured using a laser thickness gauge to obtain the volume V = L × W × H of the lithium-ion battery. The initial energy density (ED) = C/V, in the unit of Wh/L.

### Example 1-1

### <Preparation of positive electrode plate>

Positive electrode active material lithium cobalt oxide (LiCoO₂), conductive carbon black, and polyvinylidene fluoride (PVDF) were mixed at a weight ratio of 97.5:1.0:1.5, and N-methylpyrrolidone (NMP) was added as a solvent to prepare a slurry with a solid content of 75wt%, which was stirred well. The slurry was evenly applied to one surface of a positive electrode current collector aluminum foil with a thickness of 10 µm, dried at 90°C to obtain a positive electrode plate coated on one side with a positive electrode active material layer of a thickness of 100 µm. The above steps were repeated on the other surface of the positive electrode current collector to obtain a positive electrode plate coated with the positive electrode active material on both sides. After drying at 90°C, cold pressing was performed, followed by cutting and tab welding to obtain a positive electrode plate with specifications of 74 mm × 867 mm for use.

### <Preparation of negative electrode plate>

Negative electrode active material graphite, conductive carbon black, and styrene-butadiene rubber (SBR) were mixed at a mass ratio of 97:1.8:1.2, and deionized water was added as a solvent to prepare a slurry with a solid content of 45wt%, which was stirred well in a vacuum mixer to obtain a negative electrode slurry. The negative electrode slurry was evenly applied to one surface of a negative electrode current collector copper foil with a thickness T of 10 µm, dried at 90°C to obtain a negative electrode plate coated on one side with a negative electrode active material layer of a thickness of 100 µm. The above steps were repeated on the other surface of the copper foil to obtain a negative electrode plate coated with the negative electrode active material layer on both sides. After drying at 90°C, cold pressing was performed, followed by cutting and tab welding to obtain a negative electrode plate with specifications of 78 mm × 875 mm for use.

### <Preparation of electrolyte>

In a dry argon atmosphere glove box, organic solvents ethylene carbonate (EC), propylene carbonate (PC), diethyl carbonate (DEC), and ethyl propionate (EP) were mixed at a mass ratio of EC:PC:DEC:EP = 3:1:3:3, and lithium salt lithium hexafluorophosphate (LiPF₆) was added to the organic solvent, dissolved, and mixed well to obtain an electrolyte with a lithium salt concentration of 1 mol/L.

### <Preparation of separator>

A polyethylene film (provided by Celgard) with a thickness of 7 µm was used.

### <Preparation of lithium-ion battery>

The prepared positive electrode plate, separator, and negative electrode plate were stacked in sequence, so that the separator was sandwiched between the positive electrode plate and the negative electrode plate for separation. The resulting stack was wound to obtain an electrode assembly. The electrode assembly was placed into an aluminum-plastic film packaging bag, moisture was removed at 80°C, the prepared electrolyte was injected, and the packaging bag was subjected to vacuum encapsulation, standing, formation, degassing, and trimming processes to obtain a lithium-ion battery. An upper limit voltage for formation was 4.5V, a formation temperature was 70°C, and a standing time in formation was 2 hours.

The packaging bag includes a sealing layer, a second metal layer, and a protective layer stacked in sequence, with a thickness T₄ of the packaging bag being 120 µm, a material of the sealing layer being polyolefin with a thickness of 35 µm, a thickness T₃ of the second metal layer being 40 µm, and a material of the protective layer being polyamide with a thickness of 45 µm.

### Examples 1-2 to 1-8

These examples were the same as Example 1-1, except that relevant data were adjusted according to Table 1.

### Example 1-9

This example was the same as Example 1-1, except that the positive electrode current collector was prepared according to the following preparation method, and in the <Preparation of positive electrode plate>, the aluminum foil was replaced with a composite positive electrode current collector, the positive electrode plate included a double-sided region (74 mm × 795 mm), a single-sided region (74 mm × 62 mm), and an empty foil region not coated with the positive electrode active material, and in the <Preparation of lithium-ion battery>, the single-sided region was used for termination.

The composite positive electrode current collector included a polymer layer and first metal layers disposed on both surfaces of the polymer layer, where a material of the first metal layer was aluminum, a thickness T₁ of the first metal layer was 0.5 µm, a material of the polymer layer was polyethylene terephthalate (PET), and a thickness T₂ of the polymer layer was 8 µm.

### Examples 1-10 to 1-19

These examples were the same as Example 1-9, except that relevant data were adjusted according to Table 1.

### Examples 2-1 to 2-11

These examples were the same as Example 1-12, except that relevant data were adjusted according to Table 2.

### Comparative examples 1 to 3

These examples were the same as Example 1-1, except that relevant data were adjusted according to Table 1.

### Comparative examples 4 to 7

These examples were the same as Example 1-9, except that relevant data were adjusted according to Table 1.

The preparation parameters and performance of each example and comparative example are shown in Tables 1 and 2.

**Table 1**

| | T (µm) | T₁ (µm) | T₂ (µm) | δ (%) | R (MPa) | Internal resistance (mΩ) | Impact pass rate (%) |
|---|---|---|---|---|---|---|---|
| Example 1-1 | 10 | / | / | 8.0 | 370 | 20.2 | 74 |
| Example 1-2 | 10 | / | / | 8.6 | 358 | 20.2 | 76 |
| Example 1-3 | 10 | / | / | 9.9 | 289 | 20.1 | 78 |
| Example 1-4 | 10 | / | / | 13.3 | 260 | 20.2 | 79 |
| Example 1-5 | 10 | / | / | 15.2 | 240 | 20.1 | 82 |
| Example 1-6 | 10 | / | / | 20.0 | 220 | 20.1 | 83 |
| Example 1-7 | 10 | / | / | 25.0 | 210 | 20.2 | 84 |
| Example 1-8 | 10 | / | / | 9.0 | 310 | 20.1 | 79 |
| Example 1-9 | 10 | 0.5 | 8 | 15.2 | 240 | 49.6 | 92 |
| Example 1-10 | 10 | 0.6 | 8 | 15.2 | 240 | 33.0 | 91 |
| Example 1-11 | 10 | 0.8 | 8 | 15.2 | 240 | 32.5 | 90 |
| Example 1-12 | 10 | 1.0 | 8 | 15.2 | 240 | 32.1 | 90 |
| Example 1-13 | 10 | 1.2 | 8 | 15.2 | 240 | 31.9 | 90 |
| Example 1-14 | 10 | 1.5 | 8 | 15.2 | 240 | 31.5 | 87 |
| Example 1-15 | 10 | 1.7 | 8 | 15.2 | 240 | 31.0 | 84 |
| Example 1-16 | 10 | 2.5 | 8 | 15.2 | 240 | 30.6 | 80 |
| Example 1-17 | 10 | 1.2 | 3 | 15.2 | 240 | 23.1 | 84 |
| Example 1-18 | 10 | 1.2 | 7.6 | 15.2 | 240 | 28.2 | 89 |
| Example 1-19 | 10 | 1.2 | 15 | 15.2 | 240 | 30.5 | 94 |
| Comparative example 1 | 10 | / | / | 7.3 | 401 | 19.8 | 68 |
| Comparative example 2 | 10 | / | / | 3.5 | 470 | 20.1 | 60 |
| Comparative example 3 | 10 | / | / | 16.8 | 147 | 19.9 | 55 |
| Comparative example 4 | 10 | 0.5 | 8 | 3.5 | 447 | 49.3 | 73 |
| Comparative example 5 | 10 | 1.0 | 8 | 3.5 | 447 | 33.9 | 73 |
| Comparative example 6 | 10 | 1.5 | 8 | 3.5 | 447 | 27.4 | 72 |
| Comparative example 7 | 10 | 1.7 | 8 | 3.5 | 447 | 25.2 | 69 |

| | | | | | | | |
|---|---|---|---|---|---|---|---|
| Note: The "/" in Table 1 indicates that the corresponding data or parameter does not exist. | | | | | | | |

From Examples 1-1 to 1-8 and Comparative examples 1 to 3, it can be seen that when both the elongation rate and tensile strength of the negative electrode current collector are within the ranges of this application, the resulting lithium-ion battery has a higher impact pass rate, that is, better safety performance.

From Examples 1-5 and 1-9 to 1-19, it can be seen that the positive electrode current collector including a polymer layer can further improve the impact pass rate of the lithium-ion battery, that is, further enhance the safety performance of the lithium-ion battery. The thickness T₁ of the first metal layer and the thickness T₂ of the polymer layer typically affect the safety performance of the lithium-ion battery. From Examples 1-9 and 1-16, it can be seen that when the thickness T₁ of the first metal layer is within the range of this application, the resulting lithium-ion battery has lower internal resistance and a higher impact pass rate, that is, both low internal resistance and good safety performance. From Examples 1-17 and 1-19, it can be seen that when the thickness T₂ of the polymer layer is within the range of this application, the resulting lithium-ion battery has lower internal resistance and a higher impact pass rate, that is, both low internal resistance and good safety performance.

From Examples 1-9 to 1-16 and Comparative examples 4 to 7, it can be seen that when the thickness T₁ of the first metal layer and the thickness T₂ of the polymer layer are the same, if the elongation rate of the negative electrode current collector is not within the range of this application, even though the positive electrode current collector includes a polymer layer, the impact pass rate of the lithium-ion battery remains low. When both the elongation rate and tensile strength of the negative electrode current collector are within the ranges of this application, the resulting lithium-ion battery has a higher impact pass rate, i.e., better safety performance.

**Table 2**

| | T (µm) | Polymer layer material | Sealing layer thickness (µm) | T₃ (µm) | Protective layer thickness (µm) | T₄ (µm) | Internal resistance (mΩ) | Impact pass rate (%) | Energy density (wh/l) |
|---|---|---|---|---|---|---|---|---|---|
| Example 1-12 | 10 | PET | 35 | 40 | 45 | 120 | 32.1 | 90 | 620 |
| Example 2-1 | 2 | PET | 35 | 40 | 45 | 120 | 34.1 | 86 | 715 |
| Example 2-2 | 3 | PET | 35 | 40 | 45 | 120 | 33.2 | 87 | 705 |
| Example 2-3 | 5 | PET | 35 | 40 | 45 | 120 | 32.6 | 88 | 685 |
| Example 2-4 | 8 | PET | 35 | 40 | 45 | 120 | 32.6 | 89 | 660 |
| Example 2-5 | 14 | PET | 35 | 40 | 45 | 120 | 32.9 | 92 | 585 |
| Example 2-6 | 10 | PP | 35 | 40 | 45 | 120 | 28.2 | 89 | 620 |
| Example 2-7 | 10 | PI | 35 | 40 | 45 | 120 | 26.2 | 88 | 620 |
| Example 2-8 | 10 | PET | 65 | 10 | 45 | 120 | 32.0 | 92 | 620 |
| Example 2-9 | 10 | PET | 35 | 40 | 45 | 120 | 31.9 | 94 | 620 |
| Example 2-10 | 10 | PET | 20 | 20 | 15 | 50 | 31.2 | 93 | 645 |
| Example 2-11 | 10 | PET | 45 | 30 | 45 | 120 | 31.5 | 94 | 620 |

The thickness T of the negative electrode current collector typically affects the safety performance of the lithium-ion battery. From Examples 1-12, 2-1, and 2-5, it can be seen that when the thickness T of the negative electrode current collector is within the range of this application, the resulting lithium-ion battery has lower internal resistance, a higher impact pass rate, and higher energy density, that is, low internal resistance, good safety performance, and high energy density simultaneously. Compared to Examples 2-2 to 2-4, Example 2-5 has an increased thickness T of the negative electrode current collector, with minimal change in internal resistance, a further increased impact pass rate, and a slight decrease in energy density, but the impact pass rate and energy density remain high. This indicates that using a negative electrode current collector within the thickness range of this application can balance the internal resistance, safety performance, and energy density of the lithium-ion battery.

The material of the polymer layer typically affects the safety performance of the lithium-ion battery. From Examples 1-12, 2-6, and 2-7, it can be seen that when the material of the polymer layer is within the range of this application, the resulting lithium-ion battery has lower internal resistance, a higher impact pass rate, and higher energy density, that is, low internal resistance, good safety performance, and high energy density simultaneously.

The thickness T₃ of the second metal layer and the thickness T₄ of the packaging bag typically affect the safety performance of the lithium-ion battery. From Examples 1-12, 2-8, and 2-11, it can be seen that when the thickness T₃ of the second metal layer and the thickness T₄ of the packaging bag are within the ranges of this application, the resulting lithium-ion battery has lower internal resistance, a higher impact pass rate, and higher energy density, that is, low internal resistance, good safety performance, and high energy density simultaneously.

The above descriptions are only preferred embodiments of this application and are not intended to limit this application. Any modifications, equivalent substitutions, improvements, etc., made within the spirit and principles of this application should be included within the protection scope of this application.

## Claims

1. A secondary battery comprising a packaging bag and an electrode assembly accommodated within the packaging bag; wherein the electrode assembly comprises:
a positive electrode plate comprising a positive electrode current collector, wherein the positive electrode current collector comprises a first metal layer; and
a negative electrode plate comprising a negative electrode current collector, wherein an elongation rate of the negative electrode current collector is 8% to 25%, and a tensile strength of the negative electrode current collector is 200 MPa to 450 MPa.

2. The secondary battery according to claim 1, wherein the elongation rate of the negative electrode current collector is 15.2% to 25%.

3. The secondary battery according to claim 1, wherein the tensile strength of the negative electrode current collector is 200 MPa to 310 MPa.

4. The secondary battery according to claim 1, wherein the secondary battery satisfies any one of the following conditions:
(1) a thickness of the negative electrode current collector is 2 µm to 14 µm; or
(2) a thickness of the negative electrode current collector is 3 µm to 8 µm.

5. The secondary battery according to claim 1, wherein the negative electrode current collector is copper foil, nickel foil, or stainless steel foil.

6. The secondary battery according to claim 1, wherein the negative electrode plate further comprises a negative electrode material layer disposed on the negative electrode current collector, wherein the negative electrode material layer comprises a negative electrode active material, and the negative electrode active material comprises a carbon material and/or a silicon material.

7. The secondary battery according to claim 1, wherein a material of the first metal layer comprises aluminum.

8. The secondary battery according to claim 1, wherein the secondary battery further comprises a separator, wherein the separator is disposed between the positive electrode plate and the negative electrode plate, and the first metal layer is at least partially located on an outer surface of the electrode assembly.

9. The secondary battery according to claim 1, wherein the positive electrode current collector further comprises a polymer layer, wherein the polymer layer is stacked with the first metal layer, the polymer layer is located between two first metal layers, and a thickness of the first metal layer is 0.6 µm to 1.7 µm.

10. The secondary battery according to claim 9, wherein the first metal layer satisfies any one of the following conditions:
(1) a thickness of the first metal layer is 0.8 µm to 1.5 µm; or
(2) a thickness of the first metal layer is 0.8 µm to 1.2 µm.

11. The secondary battery according to claim 9, wherein a thickness of the polymer layer is 3 µm to 15 µm.

12. The secondary battery according to claim 9, wherein a material of the polymer layer comprises at least one of polyethylene terephthalate, polybutylene terephthalate, polycarbonate, polyether polyester, polyamide, polyimide, polymaleic anhydride, polymethyl methacrylate, glycidyl methacrylate grafted polyethylene, glycidyl methacrylate grafted polypropylene, glycidyl methacrylate grafted ethylene-propylene copolymer, polypropylene, ethylene-propylene copolymer, or ethylene-methacrylate copolymer.

13. The secondary battery according to claim 1, wherein the packaging bag comprises a sealing layer, a second metal layer, and a protective layer stacked together, wherein the second metal layer is located between the sealing layer and the protective layer, and the sealing layer is located on an inner side of the packaging bag; the sealing layer comprises a polyolefin, the second metal layer is aluminum foil, and the protective layer comprises polyamide and/or polyethylene terephthalate.

14. The secondary battery according to claim 13, wherein a thickness of the second metal layer is 10 µm to 40 µm, and a thickness of the packaging bag is 50 µm to 120 µm.

15. An electronic apparatus comprising the secondary battery according to any one of claims 1 to 14.
